# DEMANDE DE BREVET EUROPEEN

(11) **EP 0 948 186 A1**
(43) Date de publication de la demande: **06.10.1999**
(21) Numéro de dépôt: 99400786.2
(22) Date de dépôt: 30.03.1999
(51) Int. Cl.: H04M 17/02, H04M 3/24, G07F 9/02, G06K 19/077

(54) **Carte à mémoire de test d'automate lisant des cartes à puce**

(30) Priorité: 31.03.1998 FR 9804214
(71) Demandeur: FRANCE TELECOM SA, 75015 Paris (FR)
(72) Inventeur: Michel, Philippe, 14000 Caen (FR)
(74) Mandataire: Ballot, Paul Denis Jacques

(57) **Abrégé**

L'invention concerne les dispositifs de test d'automates comportant un coupleur destiné à recevoir une carte à puce à contact.

L'invention prévoit une carte (CAR) à puce (MCC) à contact (CTC), destinée à tester des automates utilisant des cartes à puce.

Selon l'invention, la carte (CAR) à puce (MCC) à contact (CTC) comporte des moyens (ADC) de mesure (Msr) de paramètres électriques.

## Description

La présente invention concerne le domaine des dispositifs de test d'automates lisant des cartes d'enregistrement de données ou de commande, et plus précisément les dispositifs permettant de tester les automates comportant un coupleur destiné à recevoir une carte à puce à contact.

On constate que les automates lisant des cartes à contact sont soumis à des phénomènes d'usure et de vieillissement, en particulier au niveau des connecteurs du coupleur recevant les cartes à contacts, ce qui finit par gêner ou empêcher la lecture des cartes des utilisateurs. Ainsi, du fait de la corrosion atmosphérique, de l'utilisation répétée de cartes, voire de déprédations, les connecteurs du coupleur s'oxydent et s'usent au point de présenter une importante résistance de contact qui modifie les signaux électriques d'enregistrement de données. Les services disposant d'un réseau d'automates se doivent d'assurer des opérations de maintenance régulière et de contrôle préventif des automates pour satisfaire la clientèle.

Le contrôle de l'état des connecteurs et de la conformité des signaux électriques fournis par un automate lecteur de carte est compliqué par un problème d'accès à l'intérieur du coupleur et par la présence de systèmes anti-fraude interdisant l'émission de signaux en l'absence de carte authentique.

La méthode consistant à ouvrir l'automate, à démonter le coupleur pour vérifier visuellement l'état des connecteurs et à désarmer le système anti-fraude pour mesurer manuellement le niveau des signaux électriques est excessivement longue et coûteuse pour convenir à des opérations de maintenance et de contrôle extensif d'un réseau d'automates lecteurs de cartes.

On connaît un dispositif de test, destiné plus particulièrement au contrôle des automates de téléphone public (dénommés Publiphones) fonctionnant avec des cartes de paiement à contact (commercialisées sous la dénomination de Télécartes).

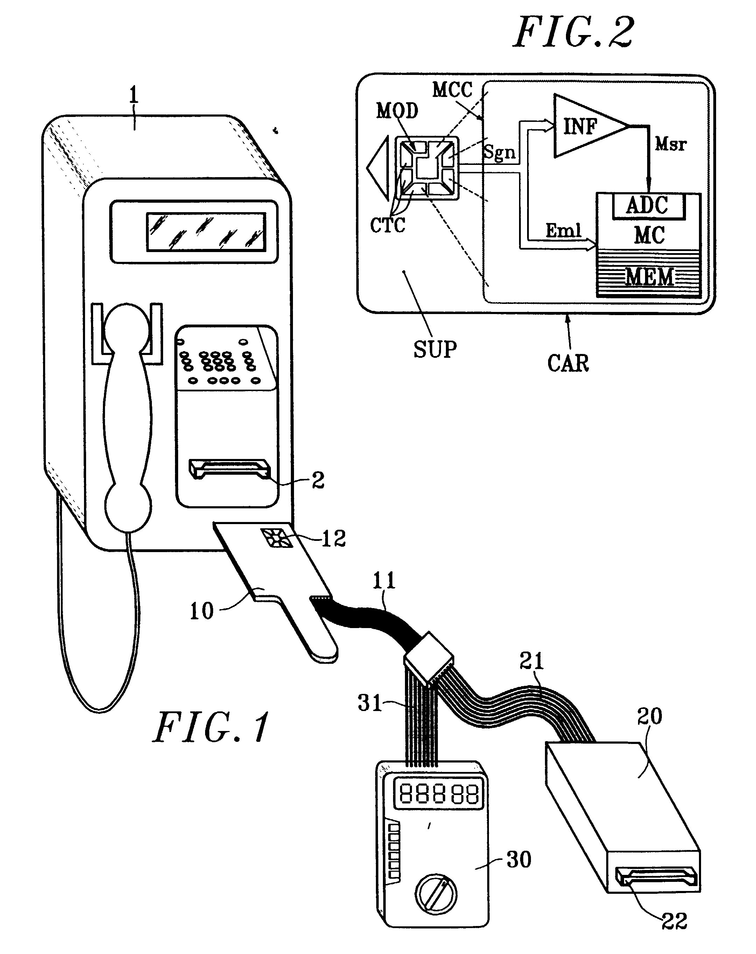

Ce dispositif connu, illustré figure 1, met en oeuvre une sonde plate 10 au format standard ISO 7816-2 d'une carte à puce, la sonde comportant des plots de contacts 12. Les contacts de la sonde sont reliés par des nappes de fils 11, 21 et 31, d'une part à un coupleur externe 20, et, de façon dérivée, à un appareil de mesure, tel qu'un voltmètre 30.

Le contrôle s'effectue en insérant une carte conventionnelle dans le coupleur externe 20 puis en insérant la sonde plate 10 dans le coupleur 2 du Publiphone 1. Pendant les échanges de données entre la carte et le Publiphone 1, le voltmètre 30 mesure les tensions électriques délivrées par le coupleur à la carte à puce.

Un inconvénient de ce dispositif de test est l'imprécision des mesures due à des perturbations introduites par l'ensemble des connecteurs et des nappes de fils de l'appareillage. Ces perturbations obèrent la mesure de variations des faibles tensions appliquées à une carte.

Un autre inconvénient de ce dispositif de test est de permettre seulement la mesure de la tension d'alimentation statique fournie par un coupleur de lecteur de cartes.

Enfin, un autre inconvénient de ce dispositif est la lenteur de chaque opération de contrôle, lenteur causée par le nombre de manipulations nécessaires à la mise en place de l'appareillage et par le temps d'établissement des échanges de données et des mesures consécutives.

L'objet de l'invention est de proposer un dispositif de test d'automate lecteur de cartes, qui soit ergonomique et d'utilisation simple et rapide.

Un but particulier de l'invention est de réaliser un dispositif de test prévoyant la mesure d'un ensemble de paramètres électriques reflétant l'usure d'un appareil lecteur de cartes, notamment la mesure de résistance électrique des connecteurs d'un coupleur.

Un autre but de l'invention est de réaliser un dispositif de test ayant une précision de mesure élevée.

Succinctement, ces buts sont atteints selon l'invention en prévoyant simplement que le dispositif de test est constitué d'une carte à puce, similaire aux cartes conventionnelles, à la différence qu'une telle carte de test intègre des moyens de mesure de paramètres électriques. Il est prévu que les résultats de mesures sont stockés en mémoire de la carte de test et lus par un appareil de lecture portatif. Un avantage essentiel de la carte à mémoire de test selon l'invention est sa facilité d'utilisation. Un autre avantage de la carte à mémoire selon l'invention est d'effectuer des tests dans les conditions exactes de fonctionnement de l'automate lecteur de cartes, en particulier si la carte de test simule les échanges de signaux d'une carte conventionnelle.

L'invention est réalisée avec une carte à puce à contact destinée à tester des automates utilisant des cartes à puce, la carte ayant la particularité de comporter des moyens de mesure de paramètres électriques.

De préférence, la carte selon l'invention comporte des moyens de stockage de résultats de mesure de paramètres électriques.

De préférence, la carte selon l'invention comporte en outre des moyens d'émulation d'un automate permettant de simuler une procédure conventionnelle d'échange de données numériques d'une carte conventionnelle avec l'automate.

Selon l'invention, la carte a, de préférence, un format et une disposition de contacts correspondant au format et à la disposition des contacts de cartes conventionnelles à simuler.

Selon des alternatives préférées, la carte peut comporter des moyens de mesure de résistance électrique d'un coupleur d'automate, et/ou des moyens de mesure de tension électrique de signaux fournis par un automate, et/ou des moyens de mesure de fréquence de signaux électriques fournis par un automate.

Selon le mode de réalisation préféré de l'invention, la carte comporte une interface d'adaptation d'impédance, un convertisseur analogique numérique effectuant les mesures de paramètres électriques, un microcontrôleur effectuant un programme de mesure de paramètres électriques et une mémoire non-volatile stockant les résultats de mesure de paramètres électriques.

L'invention prévoit enfin de réaliser un dispositif de test d'automate en mettant en oeuvre de telles cartes avec un appareil portatif de lecture et d'affichage de résultats de mesures stockées par lesdites cartes.

D'autres caractéristiques, buts et avantages de l'invention apparaîtront à la lecture de la description et des dessins ci-après, donnés uniquement à titre d'exemples de réalisations non-limitatifs. Sur les dessins annexés :
- la figure 1, précédemment décrite, représente un dispositif de test électrique d'automate lecteur de carte, selon l'état de la technique,
- la figure 2 représente une carte à puce de test, selon l'invention, à laquelle est superposé un schéma de principe des moyens de test électrique, selon l'invention,
- la figure 3 représente un schéma fonctionnel d'un module de carte de test, selon un premier mode de réalisation de l'invention,
- la figure 4 représente un schéma fonctionnel d'un autre module de carte de test, selon un second mode de réalisation de l'invention,
- la figure 5 représente, sous forme d'organigramme, un schéma d'étapes de programmation convenant au module de la figure 3, et
- la figure 6 représente, sous forme d'organigramme, un schéma d'étapes de programmation d'un appareil de lecture et d'affichage de résultats de mesure stockés par une carte, selon l'invention.

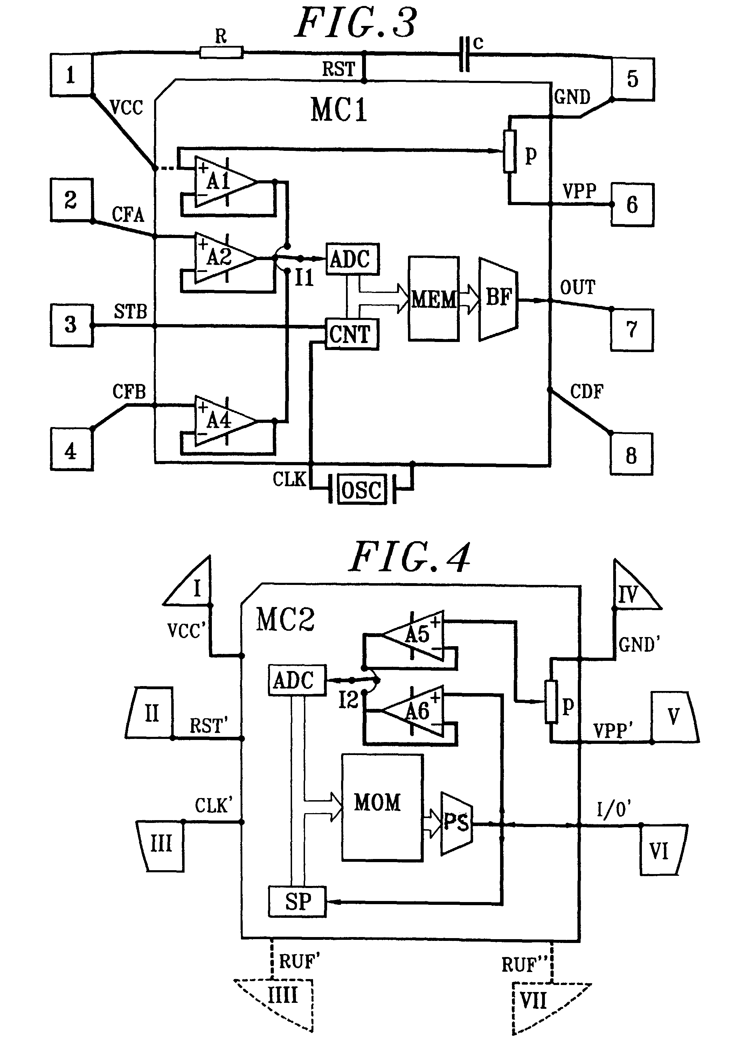

La figure 2 montre qu'une carte CAR à contact selon l'invention est constituée de préférence, à l'instar des cartes connues, d'un support SUP en matériau synthétique de dimensions normalisées selon le standard ISO 7816-2. Un petit module MOD est inséré dans le support SUP à un emplacement également normalisé. Le module comporte, de façon connue, un bornier de contacts CTC apparents et un microcircuit MCC, implanté sur un substrat semi-conducteur, appelé puce, généralement inapparent. Le microcircuit MCC peut intégrer notamment des fonctions de microcontrôleur MC, ou de microprocesseur et/ou de mémoire MEM, notamment une mémoire non-volatile, dite ROM. Le microcircuit MCC est relié aux plots de contacts CTC métalliques du bornier, le tout étant noyé dans une goutte de résine pour former le module MOD. Le module MOD est inséré dans l'épaisseur de la carte CAR en laissant affleurer les contacts CTC métalliques du bornier. La fabrication des éléments de la carte CAR fait l'objet de techniques connues de l'homme de métier, et ne sera pas détaillée plus avant.

Sur les cartes conventionnelles, les fonctions d'enregistrement de données ou de commande sont remplies par le microcircuit. Il est prévu en particulier qu'un automate à carte peut effectuer d'une part des opérations de lecture de données en mémoire de la carte et d'autre part des opérations d'écriture de données en mémoire de la carte. Ces opérations sont effectuées de préférence par l'intermédiaire d'un processeur du microcircuit qui supervise les opérations de transcription de données en mémoire et les opérations de transmission de données depuis ou vers l'automate.

Les transmissions de données entre le microcircuit et l'automate se font par échange de signaux électriques par l'intermédiaire des contacts du module et des connecteurs du coupleur.

Une carte d'enregistrement de données comporte donc généralement un microcontrôleur, c'est-à-dire un microcircuit comportant un processeur doté de sa propre mémoire non-volatile qui stocke à la fois un programme de contrôle des échanges de données et les données elles-mêmes. On choisit alors une mémoire de type EPROM, c'est-à-dire une mémoire non-volatile et, pourtant, programmable et effaçable, de façon à renouveler les enregistrements de données.

Les contacts de la carte servent ainsi à transmettre le signal électrique d'échange de données, mais aussi des signaux électriques connexes, tels que des signaux de commande, des signaux d'horloge, des signaux de synchronisation, un potentiel électrique suffisamment élevé pour programmer la mémoire EPROM et bien entendu des potentiels d'alimentation électrique de la carte.

La figure 2 visualise de façon synthétique un schéma de principe de microcircuit MCC de module MOD de carte CAR de test, selon l'invention. Le microcircuit MCC intègre, de façon caractéristique, des moyens INF, ADC, MC de mesure analogique de paramètres électriques.

Les mesures Msr sont effectuées sur les signaux Sgn électriques transmis entre l'automate et le microcircuit MCC par l'intermédiaire des contacts CTC du module MOD de la carte CAR de test.

Le microcircuit MCC mesure ainsi en premier lieu la tension d'alimentation fournie par l'automate à la carte.

Le microcircuit MCC peut en second lieu calculer la variation de la valeur mesurée par rapport à la valeur nominale de la tension d'alimentation.

Le microcircuit MCC peut de plus mesurer le courant d'alimentation débité par l'automate dans la carte CAR. Le microcircuit MCC peut alors déduire de telles mesures, la résistance des connecteurs d'alimentation (balais du coupleur).

Il est encore prévu que les mesures de tension portent sur le niveau des autres signaux électriques, comme le potentiel électrique de programmation, les signaux d'horloge, les signaux de synchronisation, les signaux de commande et les signaux d'échange de données.

A cet effet, la carte CAR de test selon l'invention, comporte de préférence des moyens MC, MEM, d'émulation Eml du fonctionnement d'une carte conventionnelle, moyens qui permettent de simuler une transmission conventionnelle de signaux électriques d'échange de données et de signaux électriques connexes.

En outre, il est prévu selon l'invention de mesurer des paramètres électriques autres que des tensions, intensités et résistances, tels que les fréquences, durées, temps de montée et temps de descente des signaux électriques échangés.

Les moyens de mesure comportent de préférence un ou plusieurs convertisseurs ADC analogique/numérique. Un tel convertisseur numérise une mesure analogique d'une tension électrique sous forme d'un nombre binaire correspondant à la valeur analogique de la mesure. Un tel convertisseur effectue donc fondamentalement une mesure analogique bien que le résultat se présente sous forme numérique.

De façon avantageuse, le résultat numérique de la mesure peut ainsi être stocké directement en mémoire MEM non-volatile de la carte.

L'utilisation de la carte de test selon l'invention va maintenant être détaillée. Il apparaît que la procédure de test prévue selon l'invention est particulièrement simple et rapide. En premier lieu, l'opérateur insère la carte de test dans l'automate à contrôler. Pendant l'opération de contrôle, la carte de test imite les caractères physiques et le fonctionnement des cartes conventionnelles, tout en mesurant les paramètres électriques des signaux fournis par l'automate pendant le fonctionnement. La carte mémorise alors les résultats de mesure dans sa mémoire non-volatile. Ensuite, l'opérateur peut éventuellement renouveler cette opération de contrôle sur d'autres automates.

Après chaque opération de contrôle ou après plusieurs opérations de contrôle, l'opérateur insère la carte de test dans un appareil de lecture et d'affichage possédant un système d'interprétation et de visualisation des résultats de mesure. Le système lecteur/afficheur peut être aussi bien un ordinateur équipé d'un lecteur de carte et d'un moniteur de visualisation, qu'un appareil miniaturisé portable, de type calculette à lecteur intégré, dont l'écran affiche les résultats numériques des mesures effectuées par la carte lue.

L'avantage d'un appareil de lecture et d'affichage portable est que l'opérateur peut diagnostiquer sur place la panne d'un automate et effectuer immédiatement une réparation, par exemple en remplaçant un coupleur usé. Ainsi, l'utilisation de cartes de test selon l'invention, facilite avantageusement le contrôle et la maintenance des parcs d'automates appartenant à des sociétés de services.

L'avantage essentiel de l'invention est donc de réaliser un dispositif de test, de format et d'utilisation ergonomique.

La suite de la description va détailler deux modes de réalisation de cartes de test selon l'invention, destinées plus particulièrement à des applications téléphoniques, bien que l'invention ne se limite pas à de telles applications.

Dans le domaine téléphonique, on distingue actuellement deux familles principales de Télécartes utilisables sur des Publiphones pour payer des communications.

La première famille est constituée de cartes à puces synchrones puisque chaque puce (ou microcircuit) intègre un circuit logique dont le rythme de travail et de transfert de données est synchronisé par le signal de synchronisation de l'automate-lecteur. Ces cartes n'ont pas d'horloge interne. La carte garde en mémoire non-volatile ROM, la trace des unités décomptées.

La première famille comporte deux générations de Télécartes selon la technologie mise en oeuvre et les particularités associées.

Les microcircuits des cartes de la première génération, sont réalisés en technologie NMOS, c'est-à-dire implanté sur semi-conducteur dopé négativement par oxyde métallique, et comportent une mémoire EPROM, c'est-à-dire une mémoire non-volatile programmable à l'aide de fortes impulsions électriques (VPP = 21 Volts), et effaçable seulement à l'aide de rayons Ultra-Violets.

Les microcircuits des cartes de la seconde génération de cette famille sont réalisés en technologie CMOS, c'est-à-dire intégré sur un semi-conducteur à oxydes métalliques compatibles. Le microcircuit comporte une mémoire EEPROM, c'est-à-dire une mémoire non-volatile programmable et effaçable à l'aide de signaux électriques ordinaires (tension VPP inutilisée, la tension Vcc d'alimentation suffisant à la programmation).

Une autre famille est constituée de cartes à puces asynchrones puisque chaque puce (ou microcircuit) contient un microcontrôleur doté d'une mémoire non-volatile EEPROM et d'une horloge interne. Le microcontrôleur est réalisé en technologie CMOS.

Les cartes de cette seconde famille sont capables de générer un protocole de communications, généralement crypté, à l'aide du microcontrôleur. Les cartes de la seconde famille concernent généralement des applications bancaires et l'invention permet de réaliser une carte de test de ce type. L'adaptation des particularités de l'invention pour réaliser une carte de test de la seconde famille est à la portée de l'homme de métier et ne sera pas détaillée plus avant.

Deux modes de réalisation de modules de carte de test selon l'invention, correspondant aux deux générations de la première famille, vont maintenant être détaillés.

Comme illustré figure 3, les cartes de la première génération ont des contacts électriques au nombre de huit, selon le standard ISO 7816-3.

Les contacts 1 à 8 d'une telle carte sont destinés à transmettre conventionnellement, les signaux électriques suivants :
- le contact 1 alimente le module avec un potentiel positif VCC,
- le contact 2 reçoit un premier signal de commande CFA,
- le contact 3 reçoit un signal de synchronisation STB,
- le contact 4 reçoit un second signal de commande CFB,
- le contact 5 alimente le module avec un potentiel de masse GND,
- le contact 6 reçoit un potentiel VPP suffisamment élevé pour programmer des données en mémoire MEM,
- le contact 7 émet en série des signaux de sortie OUT, et
- le contact 8 reçoit une commande CDF de destruction de fusible anti-fraude.

Un microcontrôleur MC1 de carte de test correspondant à la première génération, comporte comme illustré figure 2, un circuit R,C à résistance et condensateur reliant les bornes d'alimentation 1, 5 et une borne RST de remise à zéro pour initialiser le microcontrôleur de façon connue. De plus, un oscillateur OSC, tel qu'un quartz, fournit un signal d'horloge CLK au microcontrôleur MC1.

Chaque signal électrique à mesurer est appliqué en entrée d'un convertisseur ADC analogique/numérique intégré au microcontrôleur MC1 selon l'invention. La valeur analogique de la tension électrique du signal est ainsi mesurée par le convertisseur ADC et codée sous forme de donnée numérique disponible sur une sortie parallèle. Le microcontrôleur MC1 est programmé pour superviser les mesures effectuées par le convertisseur ADC et pour recopier les données numériques représentant les résultats de mesure dans la mémoire MEM.

Comme le montre l'exemple de réalisation de la figure 3, on peut ainsi prévoir plusieurs mesures en tension de signaux électriques, comme les signaux de commande CFA, CFB et les potentiels d'alimentation VPP et/ou VCC.

Le microcontrôleur MC1 comporte donc plusieurs montages à amplificateur A1, A2, A4 permettant de répliquer les signaux électriques VPP, CFA et CFB pour la chaîne de mesure I1-ADC-MC1-MEM. Chaque amplificateur A2 ou A4 fait partie d'un montage suiveur reproduisant en sortie le niveau de tension CFA ou CFB existant en entrée.

Le niveau de tension VPP est, quant à lui, divisé par un pont P de résistance ou un potentiomètre avant d'être appliqué en entrée d'un amplificateur A1 suiveur qui reproduit en sortie le niveau divisé de tension VPP. Une telle disposition s'applique si le niveau de tension VPP dépasse les limites dynamiques de fonctionnement de l'amplificateur A1 et du convertisseur ADC. Dans le cas des cartes de la première génération, le potentiel VPP d'effacement atteint une tension de 21 Volts, nettement supérieure à la tension VCC d'alimentation de 5 Volts appliquée au microcontrôleur MC1 donc aux amplificateurs A1, A2, A4 et au convertisseur ADC. Dans ce cas, il est prévu que le pont P de résistances divise, par exemple, d'un facteur huit la valeur de la tension VPP avant la mesure. D'autres ponts diviseurs de tensions (non représentés) peuvent être prévus en entrée des montages suiveurs à amplificateurs A2 et/ou A3. On peut prévoir avantageusement que de tels ponts P de résistances divisent d'un facteur deux la valeur des signaux électriques pour effectuer la mesure vers le milieu de la plage dynamique de fonctionnement de l'amplificateur A2 ou A4 et du convertisseur ADC. Il est également prévu de mesurer la tension VCC d'alimentation par l'intermédiaire d'un montage amplificateur (non représenté, suggéré par un pointillé) similaire.

D'ordinaire, un convertisseur analogique/numérique utilise la tension d'alimentation comme référence à ses mesures. Cette solution ordinaire est applicable à condition que la tension d'alimentation soit invariable et qu'il ne soit pas prévu de mesurer la tension d'alimentation elle-même. Dans le cas présent, il est prévu avantageusement d'élaborer un potentiel de référence stable en transformant et régulant la tension d'alimentation. Un régulateur-abaisseur de tension est donc de préférence intercalé entre l'alimentation et le convertisseur ADC (non-représenté sur les figures). Le régulateur alimenté par la tension VCC, délivre ainsi un potentiel de référence stable au convertisseur ADC.

Un commutateur ou démultiplexeur I1 est intercalé entre les sorties des montages à amplificateurs A1, A2, A3 et l'entrée du convertisseur ADC, pour appliquer successivement chaque signal VPP/8 ou CFA ou CFB en entrée du convertisseur. Le microcontrôleur MC1 commande la position du commutateur I1 afin d'effectuer une à une les mesures de tension.

Après chaque mesure, le microcontrôleur MC1 stocke les données numériques représentant les résultats de mesures analogiques des tensions VPP, VCC, CFA et CFB dans la mémoire MEM.

Il est prévu de préférence, que les mesures sont effectuées de façon simultanée avec des échanges de données entre le microcontrôleur MC1 et l'automate en cours de test. Le microcontrôleur comporte donc des périphériques (non représentés), un programme et des données en mémoire permettant de simuler le fonctionnement d'un microcontrôleur de carte conventionnelle.

De façon avantageuse, les montages à amplificateur A1, A2, A4, etc. ont alors une fonction d'interface permettant de répliquer le niveau des signaux VPP, CFA, CFB, VCC, pour la chaîne de mesure, alors que ces signaux électriques sont traités d'autre part par une chaîne d'émulation (non représentée) conventionnelle.

De préférence, les montages à amplificateur A1, A2, A4 ont une impédance d'entrée très élevée et effectuent une adaptation d'impédance de sorte que l'impédance d'entrée des contacts 1 à 8 de la carte de test est sensiblement identique à l'impédance d'entrée des contacts d'une carte conventionnelle.

La figure 3 montre en outre que le contact 3 est relié à un compteur CNT destiné à mesurer la fréquence du signal STB de synchronisation. Le compteur CNT est avantageusement cadencé par le signal CLK d'horloge interne fourni par l'oscillateur OSC du module de façon à pouvoir comparer la fréquence des signaux de l'automate par rapport à une fréquence de référence. Le microcontrôleur MC1 supervise le fonctionnement du compteur CNT et stocke également le résultat de la mesure de fréquence en mémoire MEM non-volatile.

Pour accéder aux résultats des mesures stockées en mémoire MEM, il est prévu avantageusement que le microcontrôleur MC1 comporte et utilise une sortie OUT reliée au contact 7 de façon tout à fait analogue à la sortie série de données existante sur les modules de cartes conventionnelles. On a vu précédemment que l'opérateur après avoir contrôlé un automate, insère la carte de test dans un appareil de lecture et d'affichage des résultats de mesure. Cet appareil applique sur les contacts 2 et 4 de la carte de test, des signaux de commande CFA et CFB correspondant à un ordre de lecture des données en mémoire.

Consécutivement, le microcontrôleur MC1 est programmé pour délivrer les données numériques correspondant aux résultats de mesure, sur un port BF ou tampon de transmission série connecté au contact 7 de sortie OUT. L'appareil de lecture et d'affichage recueille ainsi les données et les traite de façon à afficher les résultats de mesure de façon intelligible pour l'opérateur.

De préférence, le microcontrôleur met en oeuvre un programme permettant d'une part de simuler la procédure conventionnelle d'échange de données numériques avec l'automate, cette part du programme et les échanges étant similaires à ceux d'une carte à puce conventionnelle et permettant d'autre part d'effectuer les mesures de paramètres électriques.

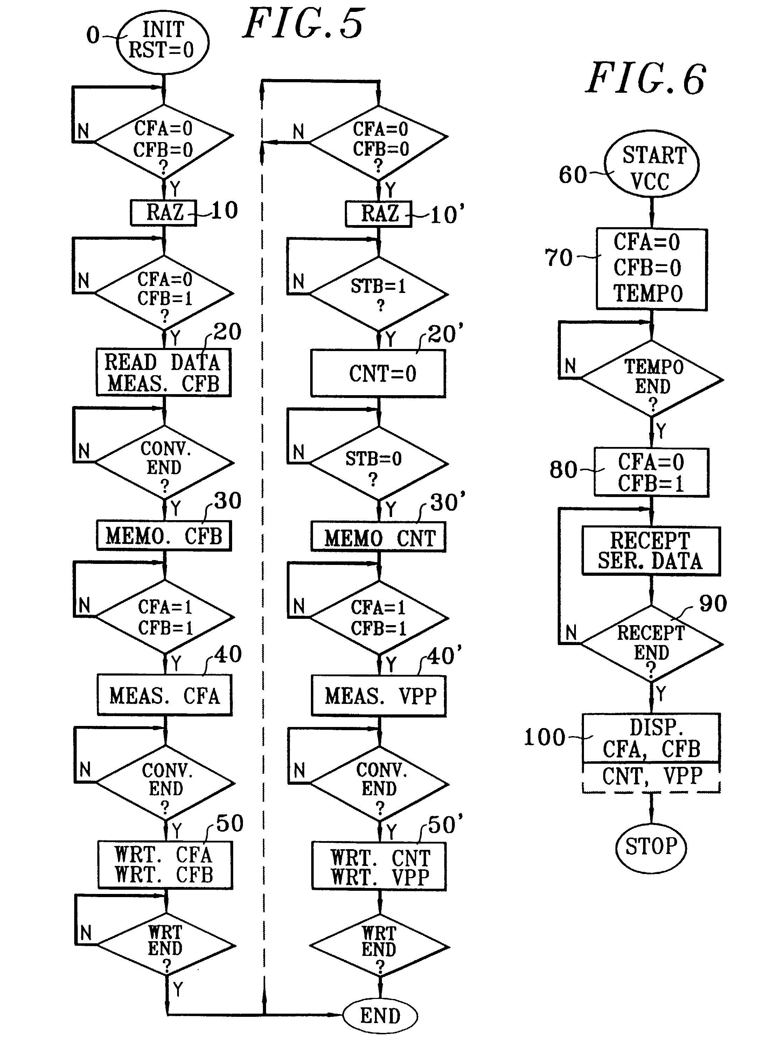

La figure 5 schématise sous forme d'organigramme, un exemple d'algorithme de programmation du microcontrôleur MC1 correspondant au premier mode de réalisation de carte de test selon l'invention. Selon cet exemple, l'algorithme comporte les étapes principales suivantes :
- à l'étape 0, le microcontrôleur est initialisé après l'insertion de la carte dans l'automate. L'initialisation commence lors de l'alimentation de la carte par la tension Vcc et dure tant que le signal RST a un niveau bas 0.
- le programme attend alors que l'automate donne un ordre RAZ de remise à zéro, en délivrant des signaux de commande CFA et CFB à l'états 0 inactifs ; après un tel évènement,
- à l'étape 10, le microcontrôleur initialise le compteur d'adresse, lit et transmet le premier bit de donnée d'adresse 000 ; puis,
- le programme attend que l'automate délivre des signaux de commande CFA inactif et CFB actif, correspondant à un ordre de lecture ; après un tel évènement,
- à l'étape 20, le microcontrôleur lit et transmet de façon séquentielle, les données DATA présentes en mémoire non-volatile, tout en mesurant avantageusement selon l'invention, le niveau du signal CFB qui est précisément à l'état actif ; puis,
- le programme attend la fin de la conversion numérique de mesure de CFB ; après un tel évènement,
- à l'étape 30, le microcontrôleur retient le résultat de mesure de CFB en mémoire vive (mémoire de type RAM, c'est-à-dire volatile) ; puis,
- le programme attend que l'automate délivre des signaux de commande CFA et CFB actifs, correspondants à un ordre d'écriture ; après un tel événement,
- à l'étape 40, le convertisseur du microcontrôleur effectue avantageusement selon l'invention une mesure de niveau du signal CFA qui est précisément à l'état actif ; puis,
- le programme attend la fin de la conversion numérique de mesure de CFA ; après un tel évènement,
- à l'étape 50, le microcontrôleur enregistre les résultats. Les résultats numériques des mesures des signaux CFA et CFB retenus en mémoire vive de type RAM sont alors transférés et enregistrés en mémoire non-volatile de microcontrôleur, mémoire de type ROM (EPROM ou EEPROM). De façon avantageuse, suivant un tel programme, les résultats numériques des mesures des signaux CFA et CFB sont disponibles opportunément lorsque l'automate donne un ordre d'écriture (CFA = CFB = 1) et délivre une impulsion VPP de programmation, sans laquelle la mémoire de type EPROM ne pourrait enregistrer les données numériques. Ensuite,
- le programme attend la fin de l'enregistrement des mesures de CFA et CFB pour finir le cycle et être prêt à recommencer ou bien pour effectuer un second cycle de mesures en option.

Le second cycle de mesures illustré au milieu de la figure 5, comporte des étapes 10' à 50' similaires aux étapes 10 à 50 du premier cycle, à la différence qu'il est prévu de mesurer la fréquence ou la durée du signal STB de synchronisation et/ou le niveau de tension électrique du potentiel VPP de programmation. Les étapes particulières au second cycle de mesures se placent après une étape 10' de remise à zéro RAZ, comme suit :
- le programme attend alors que le signal STB de synchronisation passe à l'état 1 actif ; dès cet évènement,
- à l'étape 20', le compteur CNT est initialisé et commence à s'incrémenter ; puis,
- le programme attend que le signal STB change en passant à l'état 0 inactif ; aussitôt après cet événement,
- à l'étape 30', le microcontrôleur arrête le compteur CNT et stocke le résultat numérique de sa mesure en mémoire vive ; puis,
- le programme attend que l'automate donne un ordre d'écriture (CFA = CFB = 1) pour que
- à l'étape 40', le convertisseur du microcontrôleur mesure avantageusement selon l'invention le niveau de tension du potentiel VPP de programmation, qui est précisément activé à la suite de l'ordre d'écriture.
- l'étape 50' d'enregistrement en mémoire non-volatile des résultats des mesures de durée (ou de fréquence) CNT du signal STB et de niveau de tension VPP de programmation, comporte des opérations et des avantages similaires à l'étape 50.

Un avantage d'un tel programme de microcontrôleur de carte de test selon l'invention, est que deux mesures de paramètres sont effectuées à chaque cycle de lecture/écriture déclenché par l'automate.

Ainsi, il suffit à l'opérateur qui effectue le contrôle de l'automate d'insérer la carte de test selon l'invention et de demander une communication téléphonique pour que deux ou quatre mesures pertinentes soient effectuées dans un intervalle de temps inférieur à la durée d'une taxation téléphonique.

De préférence, il n'est pas prévu de décompter d'unité de taxation téléphonique sur la carte de test selon l'invention.

Après avoir contrôlé un ou plusieurs automates, il est prévu que l'opérateur consulte les résultats de mesure à l'aide d'un appareil de lecture des données stockées en mémoire d'une carte à puce. L'appareil est de préférence portatif, à l'instar d'un étui à carte ou d'une calculatrice et sa réalisation, non détaillée ici, est à la portée du spécialiste des automates de lecture de cartes à puce.

Toutefois, on peut voir sur la figure 6, les étapes essentielles du programme de lecture et d'affichage de données que doit comporter un tel appareil. Selon cet exemple, l'algorithme de programmation de l'appareil comporte les étapes suivantes :
- à l'étape 60 de départ, l'appareil fournit la tension VCC d'alimentation de la carte qui s'initialise (cf étape 0 du programme du microcontrôleur).
- à l'étape 70, l'appareil effectue une remise à zéro de la carte de test en délivrant des signaux de commande CFA et CFB inactifs (cf étape 10).
- le programme de l'appareil attend la fin d'un délai de temporisation TEMPO ; puis,
- à l'étape 80, l'appareil délivre des signaux CFA inactif et CFB actif, correspondant à un ordre de lecture des données en mémoire non-volatile de la carte de test selon l'invention ;
- à l'étape 90, l'appareil reçoit, par transmission série, les données numériques correspondant aux mesures effectuées par la carte de test selon l'invention ; puis,
- le programme attend la fin de la transmission de données ; et,
- à l'étape 100, l'appareil convertit les données reçues et affiche les résultats des mesures de tension des signaux CFA, CFB et éventuellement du potentiel VPP ainsi que le résultat de la mesure de durée ou de fréquence CNT du signal STB de synchronisation.

Ces résultats sont de préférence mis en forme et affichés par l'appareil de façon intelligible pour l'opérateur.

On peut prévoir que l'appareil de lecture remet à zéro la mémoire non-volatile ROM de la carte de test où étaient inscrits les résultats de mesure.

Un avantage d'un tel dispositif de test combinant carte à puce de test et appareil de lecture est la simplification du travail de l'opérateur qui n'a aucune expérimentation et interprétation de résultat à effectuer.

D'autres mesures de paramètres électriques peuvent être effectuées par un tel module MC1, et l'invention n'est absolument pas limitée par les exemples de mesures prévus dans ce premier mode de réalisation de module de carte de test.

Subséquemment, un second mode de réalisation de module MC2 de carte de test selon l'invention, correspondant à la deuxième génération répandue de cartes téléphoniques et d'automates, va maintenant être exposé succinctement.

Comme illustré figure 4, les cartes de la seconde génération peuvent comporter huit ou seulement six contacts métalliques. Les contacts I à VI d'une telle carte sont destinés à transmettre conventionnellement les signaux électriques suivants :
- le contact I alimente le module avec un potentiel normal VCC',
- le contact II reçoit une commande d'initialisation RST',
- le contact III reçoit un signal d'horloge CLK',
- le contact IV alimente le module avec un potentiel de masse GND',
- le contact V reçoit un potentiel normal VPP' pour programmer et effacer la mémoire MOM,
- le contact VI émet et reçoit des transmissions en série de signaux d'entrée-sortie I/O', et
éventuellement, des contacts IIII et VII optionnels pourront transmettre d'autres signaux RUF' et RUF".

Les fonctions des contacts indiquées ci-dessus montrent que les cartes de la seconde génération ont besoin d'un signal d'horloge CLK' externe, mais pas de signal de synchronisation. De plus, il est prévu de lire, mais aussi d'écrire des données en les transmettant par une liaison série nécessitant seulement le contact VI. En effet, le décompte d'unités sur les cartes de la seconde génération se fait en enregistrant des données codées numériquement et comportant indifféremment des bits à 0 ou des bits à 1. En outre, le potentiel VPP de programmation/effacement n'est pas spécialement élevé et sa tension peut valoir 5 Volts comme le potentiel d'alimentation VCC.

Un module de carte de test correspondant à la seconde génération comporte de façon connue, un microcontrôleur doté d'interfaces SP et PS d'entrée-sortie, adaptées à la liaison série I/O'. Il est prévu par exemple, que le processeur et la mémoire du microcontrôleur MC2 sont reliés, de façon parallèle, d'une part à un port SP série/parallèle servant d'interface ou de tampon d'entrée, et d'autre part à un port PS parallèle/série servant d'interface ou de tampon de sortie.

Dans le second mode de réalisation de module de carte de test selon l'invention, il est prévu de mesurer le niveau des signaux de données provenant de l'automate et transmis par le contact VI. Les signaux d'entrée I/O' sont donc appliqués en entrée d'un montage suiveur à amplificateur A6. La sortie de ce montage est reliée par l'intermédiaire d'un commutateur I2 ou d'un démultiplexeur à l'entrée du convertisseur ADC. Le montage à amplificateur A6 a pour fonction de maintenir l'impédance d'entrée du contact VI de la carte de test selon l'invention. Une telle adaptation d'impédance est particulièrement indiquée pour la mesure des signaux d'entrée I/O' car une mise en parallèle des résistances d'entrée des interfaces SP, PS et du convertisseur ADC risquerait d'abaisser fortement le niveau des signaux I/O' et d'affaiblir les fronts de montée et de descente de ces signaux au point de perturber les mesures et le fonctionnement de la carte de test ou de l'automate.

La figure 4 montre encore qu'un autre montage suiveur à amplificateur A5 et à pont P diviseur est prévu pour mesurer le niveau du potentiel VPP' de programmation/effacement. Comme le potentiel VPP' n'est pas spécialement élevé et a une valeur de tension normale de 5 Volts, le pont P de résistance (ou un potentiomètre) peut avantageusement diviser d'un rapport deux la valeur VPP/2 à mesurer afin de se situer sensiblement au milieu de la plage dynamique de fonctionnement de l'amplificateur A5 et du convertisseur ADC. Une telle disposition s'applique aussi avantageusement à la mesure des signaux d'entrée I/O' (non représenté).

D'autres mesures, en particulier d'autres montages à amplificateur (analogues aux amplificateurs A1, A2, A4 de la figure 3) peuvent être prévus pour mesurer les signaux VCC', RST', CLK' ou RUF' et RUF", bien que la figure 4 ne les représente pas.

De façon générale, l'invention permet avantageusement de mesurer diverses sortes de paramètres électriques contribuant aux échanges entre un automate et une carte à puce à contact.

Les modes de réalisation décrits précédemment ont établi que la carte de test selon l'invention permet de mesurer les paramètres des signaux électriques échangés entre l'automate et la carte, tels que le niveau de tension, la fréquence, la durée de signaux électriques, voire l'intensité électrique de ces signaux. On a vu en outre que la carte de test selon l'invention permet avantageusement de mesurer des paramètres électriques non directement accessibles, telle que la résistance des coupleurs d'un automate qui se déduit des mesures de tension par un calcul.

L'invention permet d'accéder ainsi à des mesures analogiques directes mais aussi à des mesures indirectes, par déduction.

De façon avantageuse, la carte de test permet à l'opérateur lui-même d'obtenir les résultats de ces mesures directes et indirectes sans avoir à effectuer de calcul.

Il apparaît donc clairement que la mise en oeuvre de l'invention n'est pas limitée aux deux modes de réalisation de cartes de test de Publiphones exposés précédemment.

En particulier, les moyens de l'invention peuvent être mis en oeuvre pour réaliser une carte de test correspondant aux normes des cartes bancaires ou cartes de crédit (dont le standard est différent de celui des Télécartes). Une telle adaptation est à la portée de l'homme du métier et ne sera pas détaillée dans la présente.

Ainsi, des cartes de test selon l'invention peuvent être réalisées pour contrôler et effectuer la maintenance de tous types d'automates lecteurs de cartes à puce à contact, tels que les terminaux à carte, les distributeurs automatiques de billets, les taximètres, les sésames, etc.

D'autres applications, buts et caractéristiques apparaîtront à l'homme du métier sans sortir du cadre de la présente invention, dont la portée est définie par les revendications ci-après.

## Revendications

1. Carte (CAR) à puce (MCC) à contact (CTC), destinée à tester des automates utilisant des cartes à puce, caractérisée en ce qu'elle comporte des moyens (ADC) de mesure (Msr) de paramètres électriques.

2. Carte à puce à contact selon la revendication 1, caractérisée en ce qu'elle comporte des moyens (MEM) de stockage de résultats de mesure de paramètres électriques.

3. Carte à puce à contact selon la revendication 1 ou 2, caractérisée en ce qu'elle comporte en outre des moyens (MC) d'émulation (Em1) d'un automate permettant de simuler une procédure conventionnelle d'échange de données numériques d'une carte conventionnelle avec l'automate.

4. Carte selon l'une des revendications 1 à 3, caractérisée par un format et une disposition des contacts correspondant au format et à la disposition des contacts de cartes conventionnelles à simuler.

5. Carte selon l'une des revendications 1 à 4, caractérisée en ce qu'elle comporte des moyens de mesure de résistance électrique d'un coupleur d'automate.

6. Carte selon l'une des revendications 1 à 5, caractérisée en ce qu'elle comporte des moyens de mesure de tension électrique de signaux fournis par un automate.

7. Carte selon l'une des revendications 1 à 6, caractérisée en ce qu'elle comporte des moyens de mesure de fréquence de signaux électriques fournis par un automate.

8. Carte selon l'une des revendications 1 à 7, caractérisée en ce qu'elle comporte une interface (INF) d'adaptation d'impédance.

9. Carte selon l'une des revendications 1 à 8, caractérisée en ce qu'elle comporte un convertisseur (ADC) analogique numérique effectuant les mesures (Msr) de paramètres électriques.

10. Carte selon l'une des revendications 1 à 9, caractérisée en ce qu'elle comporte un microcontrôleur (MC) effectuant un programme de mesure de paramètres électriques.

11. Carte selon l'une des revendications 1 à 10, caractérisée en ce qu'elle comporte une mémoire (MEM) non volatile stockant les résultats de mesure de paramètres électriques.

12. Dispositif de test d'automate utilisant des cartes à puce, caractérisé en ce qu'il met en oeuvre une carte selon l'une des revendications 1 à 11 et un appareil portatif de lecture et d'affichage de résultats de mesure stockés par la carte.
